# EUROPÄISCHE PATENTANMELDUNG

(11) **EP 2 087 792 A2**
(43) Veröffentlichungstag der Anmeldung: **12.08.2009**
(21) Anmeldenummer: 09000899.6
(22) Anmeldetag: 23.01.2009
(51) Int. Cl.: A21B 3/15

(54) **Backblech**

(30) Priorität: 08.02.2008 DE 202008001835 U
(71) Anmelder: Zenker Backformen GmbH & Co. KG, 91217 Hersbruck (DE)
(72) Erfinder: Riedl, Horst, 86529 Schrobenhausen (DE)
(74) Vertreter: Rau, Albrecht

(57) **Zusammenfassung**

Ein Backblech zum Backen von hörnchenförmigem Backgebäck, insbesondere Vanillekipferln, umfasst einen Blech-Grundkörper (1), der eine im Wesentlichen planare, in einer Hauptebene (A) liegende Oberfläche (2) besitzt, und mindestens eine Vertiefung (6) zur Aufnahme von Teig für das zu backende Gebäck, wobei die mindestens eine Vertiefung (6) in dem Blech-Grundkörper (1) angeordnet ist, von der planaren Oberfläche (2) ausgeht und im Wesentlichen hörnchenförmig ausgebildet ist

## Beschreibung

Die Erfindung betifft ein Backblech zum Backen von hörnchenförmigem Gebäck, insbesondere Vanillekipferln.

Vanillekipferl sind ein traditionelles, deutsch-österreichisch-böhmisches Weihnachtsgebäck in Hörnchenform. Hergestellt werden sie aus einem Mürbeteig aus Mehl, Butter, Zucker, Eigelb und geriebenen Mandeln. Aus dem Teig werden dann von Hand Körnchen geformt, die anschließend auf einem herkömmlichen Backblech in einem Backofen gebacken werden. Nach dem Backen werden die Hörnchen mit Puderzucker oder Vanillinzucker bestreut. Vanillekipferl sind eine der beliebtesten Plätzchensorten. Jedoch ist deren Herstellung äußerst zeitintensiv.

Der Erfindung liegt daher die Aufgabe zugrunde, ein Backblech bereitzustellen, das eine besonders einfache Herstellung von hömchenförmigem Gebäck, insbesondere Vanillekipferln, ermöglicht.

Diese Aufgabe wird erfindungsgemäß durch die im Anspruch 1 angegebenen Merkmale gelöst. Der Kern der Erfindung liegt darin, ein Backblech mit mehreren hörnchenformigen Vertiefungen für den Teig des zu backenden Gebäcks bereitzustellen. In die Vertiefungen ist der für die Herstellung des zu backenden Gebäcks erforderliche Teig einzubringen. Im Gegensatz zu den aus dem Stand der Technik bekannten Backblechen entfällt somit die manuelle, händische Formung der einzelnen Hörnchen. Mit dem erfindungsgemäßen Backblech kann in kürzester Zeit auf einfachste Weise eine große Menge hörnchenförmiges Gebäck hergestellt werden.

Weitere vorteilhafte Ausgestaltungen der Erfindung sind in den Unteransprüchen angegeben.

Nachfolgend wird unter Bezugnahme auf die beigefügte Zeichnung eine bevorzugte Ausführungsform der Erfindung beschrieben. Dabei zeigen:
- Fig. 1: eine perspektivische Ansicht auf ein erfindungsgemäßes Backblech von schräg oben, und
- Fig. 2: einen Querschnitt durch eine Vertiefung des Backblechs.

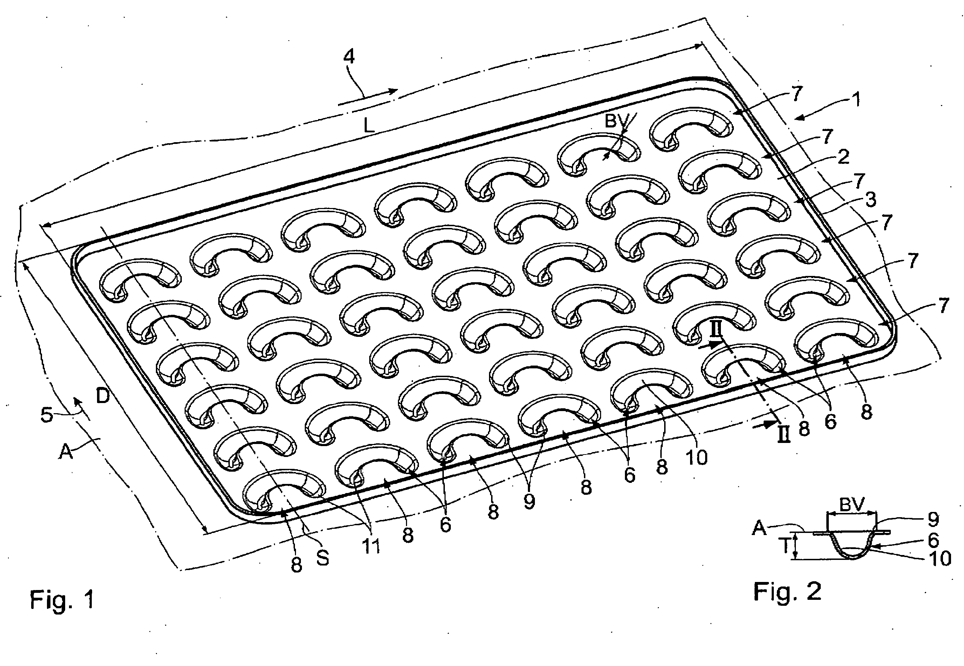

Ein in Fig. 1 dargestelltes Backblech ist rechteckig ausgebildet. Es ist zur Verwendung in bekannten Backöfen vorgesehen. Dort kann es in verschiedenen Höhen eingeschoben werden. Dazu sind in dem Backofen entsprechende Schienen vorgesehen. Es besteht aus Aluminium oder aus Stahlblech, das emailliert oder mit Polytetrafluorethylen beschichtet ist. Es kann aber auch aus einem beschichteten Eisenblech bestehen.

Das Backblech ist hier zum Backen von Vanillekipferln vorgesehen. Es umfasst einen Blech-Grundkörper 1, der eine im Wesentlichen planare Oberfläche 2 besitzt. Die Oberfläche 2 liegt in einer Hauptebene A. Der Blech-Grundkörper 1 ist von einem umbördelten Begrenzungsrand 3 umgeben, der einstückig mit dem Blech-Grundkörper 1 ansgebildet ist und von der Oberfläche 2 nach oben vorspringt. Insgesamt besitzt das Backblech beispielsweise eine Länge L von ca 42 cm und eine Breite D von ca 32 cm. Die Länge L erstreckt sich in einer Längs-Richtung 4 des Backblechs, während die Breite D in einer zu der Längs-Richtung 4 senkrecht stehenden Breiten-Richtung 5 verläuft.

Das Backblech besitzt mehrere muldenförmige Vertiefungen 6, die in dem Blech-Grundkörper 1 beabstandet zueinander angeordnet sind. Die Vertiefungen 6 sind identisch zueinander geformt. Sie sind in dem Blech-Grundkörper 1 in Zeilen 7 angeordnet, die in der Längs-Richtung 4 verlaufen und in Breiten-Richtung 5 zueinander beabstandet sind. Dabei sind die Vertiefungen 6 auch in Spalten 8 angeordnet, die in Breiten-Richtung 5 verlaufen und in Längs-Richtung 4 zueinander beabstandet sind. Insgesamt sind hier 42 Vertiefungen 6 vorgesehen, die in sechs Zeilen 7 und sieben Spalten 8 vorliegen.

Die Vertiefungen 6 sind in der Hauptebene A, wie auch aus der Draufsicht gemäß Fig. 1 hervorgeht, hömchenförmig ausgebildet.

Jede Vertiefung 6 ist bezüglich einer Symmetrieebene S symmetrisch ausgebildet, die beispielhaft für die in Fig. 1 in der linken Spalte 8 angeordneten Vertiefungen 6 eingezeichnet ist. Die Symmetrieebene S schneidet die Hauptebene A senkrecht und verläuft in der Breiten-Richtung 5. Die Vertiefungen 6 besitzen in der Ebene A eine im Wesentlichen halbbogenförmige Gestalt. Sie können aber auch U-formig oder sichelförmig gebildet sein.

Die Vertiefungen 6 gehen von der Oberfläche 2 nach unten. Sie verlaufen somit von der Oberfläche 2 in entgegen gesetzter Richtung zu dem vorspringenden Begrenzungsrand 3. Die Vertiefungen 6 können durch Tiefziehverfahren erzeugt werden. Dabei besitzen die Vertiefungen 6 einen in der Hauptebene A verlaufenden, eine geschlossene Kurve bildenden Begrenzungsrand 9, der die geschlossen Kontur der Vertiefungen 6 bestimmt. An jeden Begrenzungsrand 9 einer Vertiefung 6 schließt sich eine Vertiefungs-Wandung 10 an, die die betreffende Vertiefung 6 nach unten und seitlich begrenzt. Jede Vertiefung 6 hat im Querschnitt eine in etwa halbkreisförmige Form. In Fig. 2 ist der Querschnitt einer Vertiefung 6 im Detail dargestellt. Der Querschnitt verläuft dabei senkrecht zu der Hauptebene A. Jede Vertiefung 6 hat zwei einander gegenüber liegende freie Enden 11. Die Breite BV der Vertiefungen 6 ist dabei zwischen den Enden 11 im Wesentlichen konstant. Ausgehend von den Enden 11 nimmt die zu der Hauptebene A senkrecht orientierte Tiefe T ahmählich bis zu der Mitte der Vertiefungen 6 zu. Unter der Tiefe T wird dabei die Abmessung verstanden, die von der Hauptebene A bis zu dem Boden der Vertiefungs-Wandung 10 reicht.

Die Vertiefungen 6 haben jeweils beispielsweise eine Länge von 2 cm bis 8 cm und eine maximale Breite BV von 0,5 cm bis 3 cm. Die maximale Tiefe T reicht dabei von 0,5 cm bis 3 cm. Bevorzugt haben die Vertiefungen 6 jeweils eine Länge von 5 cm bis 8 cm, eine maximale Breite BV von 1 cm bis 2 cm und eine maximale Tiefe T von 0,5 cm bis 1,5 cm. Unter der Länge der Vertiefung 6 wird deren Abwicklung verstanden. Der Innenabstand der Enden 11 liegt zwischen 1 cm und 4 cm, bevorzugt zwischen 1,5 cm und 2,5 cm.

Zum Herstellen von Vanillekipferln ist der dafür benötigte Teig in die Vertiefungen 6 von oben einzubringen und glattzustreichen. Durch die Kontur der Vertiefungen 6 wird die Form der Vanillekipferl hervorgerufen. Nach dem Backen wird beispielsweise eine Platte auf die Oberseite des Backblechs gelegt und dieses gestürzt, sodass die einzelnen Vanillekipferl ohne zu zerbrechen aus den Vertiefungen 6 herausfallen.

Wie bereits erwähnt, springt der Begrenzungsrand 3 von der Oberfläche 2 nach oben, während die Vertiefungen 6 von der Oberfläche 2 nach unten gehen. Der Begrenzungsrand 3 verhindert, dass der auf die Oberfläche 2 aufgebrachte Teig von dem Backblech gelangen kann. Der Begrenzungsrand 3 dient somit als Überlaufschutz für den Teig bzw. als Zurückhalterand für den Teig.

Alternativ kann der umbördelte Begrenzungsrand 3 wie die Vertiefungen 6 von der Oberfläche 2 nach unten gehen. Gemäß einer weiteren Ausführungsform ist der Begrenzungsrand 3 nicht umgebördelt.

## Patentansprüche

1. Backblech zum Backen von hörnchenförmigem Backgebäck, insbesondere Vanillekipferm,
a) mit einem Blech-Grundkörper (1), der eine im Wesentlichen planare, in einer Hauptebene (A) liegende Oberfläche (2) besitzt, und
b) mit mindestens einer Vertiefung (6) zur Aufnahme von Teig für das zu backende Gebäck, wobei die mindestens eine Vertiefung (6)
i.) in dem Blech-Grundkörper (1) angeordnet ist,
ii.) von der planaren Oberfläche (2) ausgeht und
iii.) im Wesentlichen hörnchenförmig ausgebildet ist.

2. Backblech nach Anspruch 1, **dadurch gekennzeichnet, dass** die Vertiefungen (6) im Querschnitt senkrecht zur Hauptebene (A) eine in etwa halbkreisförmige Gestalt aufweisen.

3. Backblech nach Anspruch 1 oder 2, **dadurch gekennzeichnet, dass** die Vertiefungen (6) in der Hauptebene (A) eine in etwa halbbogenförmige oder U-förmige oder sichelförmige Form aufweisen.

4. Backblech nach einem der vorherigen Ansprüche, **dadurch gekennzeichnet, dass** die Vertiefungen (6) in der Hauptebene (A) zwei einander gegenüberliegende Enden (11) besitzen.

5. Backblech nach Anspruch 4, **dadurch gekennzeichnet, dass** die Tiefe (T) einer Vertiefung (6) senkrecht zur Hauptebene (A) ausgehend von den Enden (11) zunimmt.

6. Backblech nach einem der vorherigen Anspruche, **dadurch gekennzeichnet, dass** die Vertiefungen (6) in Zeilen (7) und/oder Spalten (8) angeordnet sind.

7. Backblech gemäß Anspruch 1, **dadurch gekennzeichnet, dass** die Vertiefungen (6) in der Hauptebene (A) eine Breite (BV) besitzen.

8. Backblech gemäß Anspruch 7, **dadurch gekennzeichnet, dass** die Breite (BV) der Vertiefungen (6) im Wesentlichen konstant ist.
